# EUROPEAN PATENT SPECIFICATION

(11) **EP 3 835 401 B1**
(45) Date of publication and mention of the grant of the patent: **06.08.2025**
(21) Application number: 19218856.3
(22) Date of filing: 20.12.2019
(51) Int. Cl.: C12G 1/00, C12G 3/07, C12G 1/02

(54) **PROCESS FOR WINE AGING USING GRAPE STEMS AS AN ECOLOGICAL ALTERNATIVE**
VERFAHREN ZUR WEINREIFUNG UNTER VERWENDUNG VON TRAUBENSTIELEN ALS ÖKOLOGISCHE ALTERNATIVE
PROCÉDÉ DE VIEILLISSEMENT DE VIN À L'AIDE DE TIGES DE RAISIN EN TANT QU'ALTERNATIVE ÉCOLOGIQUE

(30) Priority: 10.12.2019 PT 2019115966
(43) Date of publication of application: 16.06.2021
(73) Proprietor: Universidade de Trás-os-Montes e Alto Douro, 5000-911 Vila Real (PT)
(72) Inventor: PISSARRA SOEIRO DE CARVALHO, JOÃO MANUEL, 5000-281 VILA REAL (PT); PEREIRA GOUVINHAS, IRENE, 5000-071 CAMPEÃ - VILA REAL (PT); RAMOS NOVO AMORIM DE BARROS, ANA ISABEL, 5000-281 VILA REAL (PT)
(74) Representative: Monteiro Alves, Inês

(56) References cited:
- WO-A1-2014/049263
- ANONYMOUS: "LES ACQUISITIONS RÉCENTES EN CHROMATOGRAPHIE DU VIN - APPLICATIONS À L'ANALYSE SENSORIELLE DES VINS", 1993, XP055711051, Retrieved from the Internet <URL:https://www.librairiegourmande.fr/oenologie-degustation/5232-les-acquisitions-recentes-en-chromatographie-du-vin-applications-a-l-analyse-sensorielle-des-vins.html> [retrieved on 20200702]
- FANG ET AL: "Determination of red wine flavonoids by HPLC and effect of aging", FOOD CHEMISTRY, ELSEVIER LTD, NL, vol. 101, no. 1, 12 August 2006 (2006-08-12), pages 428 - 433, XP005754199, ISSN: 0308-8146, DOI: 10.1016/J.FOODCHEM.2005.12.036
- FERNANDEZ DE SIMON B ET AL: "Effect of size, seasoning and toasting in the volatile compounds in toasted oak wood and in a red wine treated with them", ANALYTICA CHIMICA ACTA, ELSEVIER, AMSTERDAM, NL, vol. 660, no. 1-2, 15 February 2010 (2010-02-15), pages 211 - 220, XP026867236, ISSN: 0003-2670, [retrieved on 20090926]

## Description

### Technical domain

The present application refers to a process for the use of grape stems in wine aging, as an alternative to the use of wood chips or oak wood staves.

### Background

The use of wood in the winery industry has always had a significant role in wine history: in ancient times, it was used solely as a container; subsequently it became an identity characteristic of some kinds of wine. Still later, some used the wood solely to obtain a marked aromatic profile.

The storing of wines in wooden barrels is a current resource for top range wines, being that the most valued and high scoring wines in fairs relating to this field and by the media are white and red wines matured in wood. Although its sanitation is difficult, this solution is widely used in Europe for the production of relatively small volumes of wine, essentially due to the costs associated with the use of French oak and American oak. The maturation in wood, apart from the stabilization of the color, substantially improves the structure and sensorial complexity, which is why it significantly increases the commercial value of the wines.

Currently, the use of wood continues to be an important tool in wine production, however it is seen as a mean to not only increase the complexity of the same, but also to stabilize the components contained therein and characteristic of each variety, thus preserving its typicity. If in the past the wood was used to transmit some wood and vanilla notes to the wine, nowadays many producers intend to use the wood, reducing the impact in the aromatic profile of same.

The reference to fermentation or maturing in oak barrels is nowadays common in high quality and more costly wines. In the most prestigious wine industry regions worldwide, there is an increasing resource to the use of this technology. It is a costly technique, however, the level of contribution to the organoleptic enrichment of the wines and spirits is beyond question.

It is speculated that the first wooden containers were developed around the year 200 BC, replacing the old and limited camphor.

If initially it was treated solely as an impermeable container suitable to the transport and storage of drinks, today the oak barrels are true enological tools.

Barrels made from chestnut, mahogany, acacia and pine have already been used in history according to the regional availability. However, the ability to confer pleasant aromas and tannins, micro-oxygenate, stabilize and decant the solids in the wine, made oak the most desired resource when trying to refine the characteristics of the wine.

Apparently, oak is shown as the mandatory resource in the wine production, however, if we simultaneously consider its rarity, high cost and marked aromatic influence, it is easy to conclude that its use is limited to "deserving" wines and which are able to take advantage of its properties, improving the "personality" and the "character".

In the barrel manufacturing technology, the thermal treatment is very important. Apart from the simple need to bend the staves that will be used in the manufacturing of the barrels, the thermal treatment provides alterations in the structure and the chemical composition of the wood. These modifications, qualitative and quantitative, depend on the intensity and duration of the "toast".

If on one hand the toast leads to the desired compounds to improve the aromatic profile of the wines, on the other hand, it also destroys some undesirable compounds that exist in the wood.

For the last years, this technique has progressed enormously. The thermal degradation process of the main elements of the wood (cellulose, hemicellulose and lignin) and the forming of the compounds (furfural, lactones and vanillin, for example) able to transfer to the wine several aromatic notes (spices, toast, caramel, almond, etc.) is widely known today.

The manufacturers turn to specific toasting profiles to distinguish their products from the competition and it is increasingly common for the Oenologist to draw the desired toasting profile together with the wood merchant.

Some of the particularities of the wooden barrels are the fact that they are costly, occupy a large space in the wine cellar and present a limited shelf life, being the main source of undesirable microorganisms, as is the case of *Brettanomyces bruxellensis.* In this manner, the wine manufacturers are searching for alternatives that can accelerate this process, having in mind the obtention of more economic wines and that show similar wood characteristics as the barrels where the wines are usually matured.

Document WO2014049263A1 discloses a method for making and maturing a wine comprising at least one fermentation phase, also comprising a step that consists of macerating stalks and/or pieces of lignified stalk in the wine. This method uses small quantities of grape talks during the vinification process to improve the taste of wine.

Documents *"*Les acquisitions récentes en chromatographie du vin: applications à l'analyse sensorielle des vins" (1993) and "Determination of red wine flavonoids by HPLC and effect of aging" (Food chemistry - 2006) disclose techniques used to determine the compounds present in wine, including after aging. None of these documents disclose the use of toasted grape stems to improve the sensorial profile of aging wine.

Document "Effect of size, seasoning and toasting in the volatile compounds in toasted oak wood and in a red wine treated with them (Analytica Chimica Acta - 2010) discloses the influence of wood toasting in the compounds present in wine, but it does not disclose the use of toasted grape stems to simulate the wood aging process.

In view of the high economic and social importance of the wine industry in the Demarcated Douro Region and beyond and the generation of high quantities of residues during the wine production, it is crucial to value these residues to maintain the environmental sustainability and the competitiveness of this sector, with emphasis on Circular Economy.

### Summary

The present application refers to a wine aging process using grape stems that comprises the following steps:
- Toasting of the grape stems;
- Adding the prior grape stem to the wine in a proportion of 0.1 kg of stem for 1 L of wine, in a period between 1 month and 3 years;
- Periodically collecting samples for chromatographic analyses of the control wines, and
- separating the stems of the wine.

In one embodiment, the light toast occurs between 120 and 180°C for 5 minutes.

In another embodiment, the medium toast occurs up to 200°C for 10 minutes.

In still another embodiment, the heavy toast occurs up to 225°C for more than 15 minutes.

### General Description

The present application describes the good use and valorization of the residues of wine production, particularly the stems, by means of their use as an alternative to the oak wood in wine maturing. This matrix presents a macromolecule composition that is similar to the oak wood, which is why the reactions involved during the toasting process and the interactions with the chemical composition of the wines are similar.

The stem is a by-product of the wine industry, and it is presently described as a substitute for oak wood in the process of wine aging. In fact, it is annually verified in a worldwide and particularly European level, the generation of large quantities of residues resulting from the wine industry, since the wine production assumes high economic and traditional importance. These residues may cause potential environmental problems and compromise the economic sustainability and the competitiveness of the wine industries. The valorization of the same must contribute to their utilization in useful, efficient and environmentally friendly processes, which must contribute to the reduction of the environmental impact of this industry. Therefore, with this proposal, it is intended to value one of the residues of the wine industry, and in this manner reduce the environmental impact which these may cause.

The stems represent a considerable slice of the organic residues resulting from the wine industry, representing around 25% of the same. This is a matrix of small commercial value, very rich in procyanadins, and for this reason with highly astringent characteristics, being currently used in animal feed and as a fertilizer.

### Brief description of the figures

For an easy understanding of the present application the figures are attached, which represent preferred embodiments, which however do not intend to limit the technology herein disclosed.

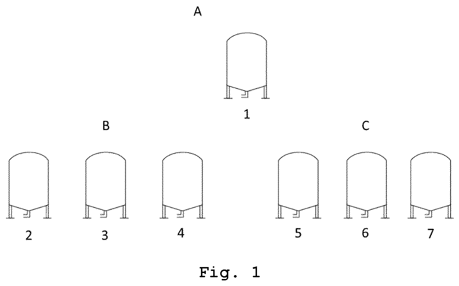

Figure 1 represents the wine aging process system with different toast levels, wherein (A) corresponds to the control, (B) are vats using the wood staves in different toast levels light (2), medium (3), heavy (4), (B) are vats with space subjected to the same toast levels used in the wood staves of oak, light (5), medium (6), heavy (7).

### Description of embodiments

Referring to the figures, some embodiments are now described in a more detailed manner, which do not intend, however, to limit the scope of the present application.

The present application is centered on the use of stems, as a substitute for oak wood, in wine aging. This use is possible since the stem is a lignocellulosic material, where the main component is cellulose (30.3%), followed by hemicelluloses that are insoluble in hot water (21%) and the lignin (17.4%). As regards the other components, the high levels of tannins (15.9%) must be noted, which means that the composition, in macromolecules, is similar to that of oak wood (40% cellulose; 20% hemicellulose; 25% lignin; 10% tannin).

In this patent application the recovery and valorization of the stems is described, simulating the wood toasting process by means of the stem toast.

To this end, it is intended to verify whether the effect of the toast in the macromolecules of the oak wood is also verified in this matrix. It is expected that the reactions that occur at the level of cellulose, hemicellulose, lignin and tannins of the wood, may also occur in connection with the stems.

Therefore, as regards the cellulose level, it is expected that with the toasting process, there is a break in this cellobiosis unit and, in this manner, this nutrient of *Brettanomyces bruxellensis* yeast may lead to conversion reactions of the cinnamic acids of the wine, forming ethyl and vinyl phenols, in a smaller scale than that which occurs in the case of oak wood, and in this manner, reduce the negative impact which these may have on the wine stored, in this case, in stainless steel vats (aged with stalk).

As regards the hemicelluloses and considering that the toasting process leads to the liberation of individual sugars, it is expected that the development of caramelization reaction occurs, leading to the formation of furfural and hydroxymethylfurfural, characterized by a caramel aroma, which will benefit the stored wine. In parallel to this reaction, and since the majority of monosaccharides are reducing sugars, it is expected that the Maillard reaction will occur between these and the wine α-amino acids. The Strecker reaction may also take place among the intermediary dicarbonyl compounds from the Maillard reaction and the wine α-amino acids, with the formation of Strecker aldehydes that may have extremely beneficial sensorial effects on the wine, depending on the amino acid involved in the reaction.

Still in the level of the lignin, and since these are comprised of cinnamic alcohols, it is expected that the stem toasting process may lead to the formation of vanillin, whereby there will be more forming of this compound, the higher the coniferaldehyde content formed during the toasting process.

As regards the composition of tannins condensed in the stems, this must be in some way inferior to that found in oak wood, so as to avoid the reactions between the ortho diphenols of the first and the wine ethanol stored in the vat, thus avoiding the forming of diacetyl, considered a defect of the wines aged in barrels.

The process of wine aging using grape stems comprises the following steps:
- Toasting the grape stems;
- Adding the prior grape stems to the wine in a proportion of 0.1 kg of stalk for 1 L of wine, in a period between 1 month and 3 years;
- Periodically collecting samples for chromatographic analyses of the control wines;
- Separating the stems from the wine.

Wherein the light toast occurs at temperatures between 120°C and 180°C, where usually 5 minutes are sufficient to reach this stage; the medium toast occurs at 200°C for 10 minutes toast, and the heavy toast occurs as from 15 minutes, up to a temperature of 225°C.

### Experimental example:

In accordance with Figure 1, seven stainless steel vats were used, where 30 L of Dona Matilde wine from the Demarcated Douro Region were stored, in each vat, selected as being a wine with favorable characteristics to its storage in these conditions. This wine is characterized by the fact that the grapes from mature vines (more than 80 years old), with low productivity but high polyphenolic concentration, which makes it compatible with the carrying out of the invention.

For these seven vats, one corresponds to the control comprising solely wine (1), three vats with the use of wood staves that underwent toasting processes (B) and wherein triple analyses were carried out.

The light toast (2), (5), wherein the surface of the wood occurs at temperatures between 120° C and 180°C, where usually 5 minutes are sufficient to reach this stage; medium toast (3), (6) after 10 minutes toast, the surface reaches 200°C and the heavy toast (4), (7) - as from 15 minutes, the internal surface will reach 225°C.

Three additional vats (B) comprised stems that underwent a prior simulation of the previously described toasting process for the oak wood, but in this case in the muffle. 3 Kg of stems were used for each one of the analyses.

Periodically, samples were collected from each of the vats, and analysis made at the phytochemical level and volatile composition. As regards the identification of volatile compounds, compounds such as ethyl and vinyl phenol were not identified, showing that there may not have been the cellulose break in cellobiose units, which is the Brettanomyces nutrient, which in turn may not be present either in the wine. These compounds are considered as defects of the wine. As regards the furanic compounds, there were identified the furfural and the 5-hydroxymethylfurfural, which are habitually formed during the aging of the wine through the break of the hemicellulose macromolecules. When determining the vanillin by HPLC, this analysis showed the presence of this compound, extremely beneficial for an aged wine, since it is characterized by a pleasant vanilla aroma. In time 0 (control) the concentration of vanillin present in the wine in question was not detectable by the HPLC-UV technique and after 9 months aging its concentration became 19.98±0.44 µg/mL, which value was considerably different from those obtained along the study (monthly analyzed quotas).

Similarly, sensorial analysis tests were carried out for each of the samples, evidencing with these analyses the results that were obtained by analytic determinations.

## Claims

1. Wine aging process using grape stems **characterized in that** the process comprises the following steps:
- Toasting the grape stems;
- Adding the prior grape stems to the wine in a proportion of 0.1 kg of stalk to 1 L of wine, in a period between 1 month and 3 years;
- Periodically collecting samples for chromatographic analyses of the control wines;
- Separating the stems from the wine.

2. Process according to the preceding claim, **characterized in that** the light toast occurs between 120 and 180°C for 5 minutes.

3. Process according to any of the preceding claims, **characterized in that** the medium toast occurs up to 200°C for 10 minutes.

4. Process according to any of the preceding claims, **characterized in that** the heavy toast occurs up to 225°C for more than 15 minutes.

## Patentansprüche

1. Verfahren zur Reifung von Wein unter Verwendung von Traubenstielen, **dadurch gekennzeichnet, dass** das Verfahren die folgenden Schritte umfasst:
- Rösten der Traubenstiele;
- Zugabe der zuvor gerösteten Traubenstiele zum Wein in einem Verhältnis von 0,1 kg Stiele zu 1 l Wein über einen Zeitraum zwischen 1 Monat und 3 Jahren;
- Regelmäßige Entnahme von Proben für chromatographische Analysen der Kontrollweine;
- Abtrennung der Stiele vom Wein.

2. Verfahren nach dem vorstehenden Anspruch, **dadurch gekennzeichnet, dass** das leichte Rösten bei 120 bis 180 °C für 5 Minuten erfolgt.

3. Verfahren nach einem der vorstehenden Ansprüche, **dadurch gekennzeichnet, dass** das mittlere Rösten bei bis zu 200 °C für 10 Minuten erfolgt.

4. Verfahren nach einem der vorstehenden Ansprüche, **dadurch gekennzeichnet, dass** die starke Röstung bei bis zu 225 °C für mehr als 15 Minuten erfolgt.

## Revendications

1. Procédé de vieillissement du vin à l'aide de rafles de raisin, **caractérisé en ce que** le procédé comprend les étapes suivantes :
- Torréfaction des rafles de raisin ;
- Ajout des rafles préalablement torréfiées au vin dans une proportion de 0,1 kg de rafles pour 1 litre de vin, pendant une période comprise entre 1 mois et 3 ans ;
- Prélèvement périodique d'échantillons pour analyses chromatographiques des vins témoins ;
- Séparation des rafles du vin.

2. Procédé selon la revendication précédente, **caractérisé en ce que** le grillage léger est effectué entre 120 et 180 °C pendant 5 minutes.

3. Procédé selon l'une quelconque des revendications précédentes, **caractérisé en ce que** le grillage moyen est effectué jusqu'à 200 °C pendant 10 minutes.

4. Procédé selon l'une quelconque des revendications précédentes, **caractérisé en ce que** le grillage intense est effectué jusqu'à 225 °C pendant plus de 15 minutes.
